# EUROPÄISCHE PATENTSCHRIFT

(11) **EP 0 899 307 B1**
(45) Veröffentlichungstag und Bekanntmachung des Hinweises auf die Patenterteilung: **02.05.2003**
(21) Anmeldenummer: 98112617.0
(22) Anmeldetag: 08.07.1998
(51) Int. Cl.: C08L 95/00, C08J 11/06, B29B 17/00, E01C 9/10

(54) **Verfahren zur Entsorgung bituminöser Dachbaustoffe**
Process for disposing of bitumen roofing materials
Procédé de retraitement de matériaux de couverture bitumineux

(30) Priorität: 23.08.1997 DE 19736748
(43) Veröffentlichungstag der Anmeldung: 03.03.1999
(73) Patentinhaber: Heyer, Matthias Asphalt- und Betonmischwerke, 41063 Mönchengladbach (DE)
(72) Erfinder: Heyer, Hans-Josef, 41844 Wegberg (DE); Pomp, Josef Dipl.-Ing., 41065 Mönchengladbach (DE); Pomp, Ralf Dipl.-Ing., 52525 Heinsberg (DE)
(74) Vertreter: von Creytz, Dietrich, Dipl.-Phys.

(56) Entgegenhaltungen:
- EP-A- 0 531 622
- WO-A-92/01751
- DE-A- 4 318 447
- DE-A- 4 406 161
- US-A- 2 368 371
- US-A- 4 325 641

## Beschreibung

Die Erfindung betrifft ein Verfahren zur Entsorgung bituminöser Dachbaustoffe, insbesondere von Dachbahnen. Sie betrifft ferner ein Verfahren zum Herstellen von Straßenasphalt aus einem Mineralgranulat, dem Bitumen beigemischt wird. Sie betrifft schließlich ein Asphaltmischgut mit einem granulierten Mineralgerüst einerseits und einem Bitumen-Bindemittel andererseits.

Bituminöse Dachbaustoffe, insbesondere Dachbahnen, das heißt sogenannte "Dachpappe", bestehen in der Regel aus 10 bis 15 Gew.% Trägermaterial, insbesondere Kunststoffvlies, etwa 70 bis 80 Gew.% Bitumen und im übrigen im wesentlichen aus Split. Das in bituminösen Dachbaustoffen verwendete Bitumen ist in der Regel höherwertig als das Bitumen, das normalerweise als Bindemittel beim Herstellen von Asphalt oder dergleichen eingesetzt wird. Der Qualitätsunterschied ist durch die - vor allem thermisch - höheren Anforderungen begründet. Das Bitumen von Dachbahnen ist nämlich wegen seiner geringen Schichtdicke viel größeren Temperaturschwankungen ausgesetzt, als die mehrere cm dicke Asphaltdecke im Straßenbau.

Bei der Produktion bituminöser Dachbaustoffe, also von Bitumendachbahnen, sowie daraus hergestellter Erzeugnisse, kommt es im Rahmen von Qualitätssicherungsmaßnahmen immer wieder zur Aussonderung von Fehlchargen bzw. Produktionsabfallmengen. Ebenfalls fallen beim Rückbau von Dächern im Rahmen von Dachsanierungen bzw. Abbrüchen erhebliche Mengen bituminöser Dachbaustoffe an. Die Entsorgung dieser Abfälle ist, z.B. bei Verbrennung, aufwendig und umweltschädlich.

Aus US 43 25 641 ist es bekannt, Asphaltschindeln zur Verwendung im Straßenbau zu recyclen. Zu diesem Zweck werden die Schindeln in Asphalt- bzw. Schweröl gegeben und durch Rühren der Mischung zerkleinert.

Bei der Herstellung bituminöser Straßenbaustoffe, zu denen im vorliegenden Zusammenhang nicht nur Straßenasphalt, sondern auch bituminöser Estrich oder dergleichen gerechnet werden, wird ein Mineralgranulat, das heißt ein granuliert aufbereitetes Mineralgerüst, auf eine relativ hohe Temperatur, z.B. in der Größenordnung von 200°, erhitzt und zur Mischung mit Bitumen - im sogenannten Asphaltmischer - bereitgehalten

Der Erfindung liegt die Aufgabe zugrunde, bituminöse Dachbaustoffe aus Fehlproduktion oder Rückbau einer stofflichen Wiederverwendung zuzuführen. Eine "stoffliche" Wiederverwendung liegt beispielsweise vor, wenn die Bestandteile des jeweiligen Stoffs oder Gegenstands als solche, das heißt ohne - z.B. chemische - Umarbeitung, wiederverwendet werden. Erfindungsgemäß sollen die Bestandteile der Dachbaustoffe, insbesondere des Bitumen, stofflich wiederverwendet werden.

Die erfindungsgemäße Lösung besteht darin, daß die Dachbaustoffe einem Mineralgranulat im Produktionsgang bituminöser Straßenbaustoffe, wie Asphalt, zugegeben werden. Vorzugsweise wird der Bitumenträger, das heißt der jeweilige Dachbaustoff, geschreddert und dem Mineralgranulat mit allen seinen Bestandteilen beigemischt und damit vollständig verwertet. Schreddern heißt im vorliegenden Zusammenhang: Auf irgendeine Weise, bevorzugt auf eine Stückgröße unter etwa 3 cm Durchmesser, zerkleinern.

Die erfindungsgemäße Zusammenführung von Mineralgranulat und Bitumenträger soll im Prinzip ebenso erfolgen wie herkömmlich bei der Asphaltherstellung, das heißt der jeweilige bituminöse Dachbaustoff wird, z.B. in einem Asphaltmischer, mit vorher erhitztem Mineralgranulat innig vermischt, wobei das heiße Mineralgranulat das Bitumen zum Schmelzen bringt und sich dadurch selbst verklebt bzw. bindet.

Bei dem erfindungsgemäßen Verfahren kann der jeweilige Dachbaustoff in der Regel insgesamt stofflich wiederverwendet werden. Im herzustellenden Asphalt oder dergleichen werden also nicht nur der Bitumenanteil (als Bindemittel), sondern überraschend auch die übrigen Anteile, nämlich das Trägermaterial bzw. Trägervlies und eine eventuelle Beschieferung bzw. Split stofflich wiederverwendet. Das Trägermaterial kann als stabilisierender Bindemittelträger eine innere Armierung des Asphalts verstärken; eine Beschieferung bzw. Split werden ohne weiteres in das Mineralgerüst des Asphalts integriert. Das erfindungsgemäße Verfahren erlaubt es, alle wesentlichen Bestandteile der ausgesonderten oder rückgebauten bituminösen Dachbaustoffe nicht im allgemeinen Sinne zu entsorgen, sondern tatsächlich stofflich wieder zu verwenden. Da hierbei der höherwertige Dachstoff-Bitumen in den Straßenasphalt eingebaut wird, entsteht ein ausgezeichneter Straßenbaustoff.

Die vorgenannte Paarung von Aufgabe und Lösung kann im Rahmen der Erfindung auch so ausgedrückt werden, daß nach einem Verfahren zum preiswerten Herstellen von Straßenasphalt gesucht wird und daß die Lösung darin besteht, daß dem Mineralgranulat bitumenhaltige Dachbaustoffe zugesetzt werden.

Erfindungsgemäß lassen sich bituminöse Straßenbaustoffe, wie Straßenasphalt, zumindest zum Teil aus Abfallstoffen, nämlich aus bei Fehlproduktion oder Rückbau entstehenden bituminösen, geschredderten Alt-Dachbaustoffen, herstellen. Da die anderweitige Entsorgung dieser Abfallstoffe kostspielig ist, kann der Asphalthersteller wenigstens einen Teil seiner Kosten auf den Anlieferer der Alt-Dachbaustoffe abwälzen. Durch Verwendung der Dachbaustoffe ist das Produkt Asphalt billiger als mit frischem Bitumen herstellbar.

Einige Verbesserungen und weitere Ausgestaltungen der Erfindung werden in den Unteransprüchen beschrieben.

Wie bereits oben gesagt, können die Dachbaustoffe dem Asphalt-Mineralgranulat mit all ihren originären Bestandteilen zugegeben werden. Als "originär" werden Bestandteile bezeichnet, die zu fabrikneuen Dachbaustoffen gehören. Bei aus Fehlproduktionen stammenden oder aus anderen Gründen ungebrauchten Dachbahnen bereitet die vollständige Wiederverwendung aller Bestandteile keine Probleme. Aber auch aus Rückbau gewonnene bituminöse Dachbahnen oder dergleichen können fast immer geschreddert und im übrigen, so wie sie sind, das heißt ohne Aussortieren irgendwelcher Teile, der jeweiligen Anlage zum Mischen mit dem erhitzten Mineralgranulat zugeführt werden; in Alt-Dachbahnen enthaltene Nägel und andere Eisenteile werden bevorzugt mit Hilfe eines Magnetabscheiders der dem jeweiligen Schredder zugeordnet sein kann, abgetrennt.

Im einfachsten Fall können bei Ausführung der Erfindung die angelieferten bituminösen Dachbaustoffe lediglich geschreddert in einen Asphaltmischer eingebracht werden. Das gilt sowohl für aus Rückbau kommende Dachbaustoffe als auch für ganze Bahnen, insbesondere auch im aufgerollten Zustand. Durch die Zerkleinerung mit Hilfe eines hierzu bevorzugten Shredders werden die Dachbaustoffe zu einem Granulat mit einer den Erfordernissen des herzustellenden Straßenbaustoffs entsprechenden Stückgröße aufbereitet. Die Stückgröße wird so gewählt, daß die Verarbeitung im Asphaltmischer oder dergleichen und die Vermischung mit dem gegebenenfalls hoch erhitzten Mineralgerüst bzw. -granulat problemlos vonstatten gehen, die Teile des verkleinerten bzw. granulierten Dachbaustoffs aber möglichst wenig miteinander verkleben. Stückgrößen mit Durchmessern von größenordnungsmäßig etwa 0,5 bis 3 cm oder kleiner, sind beispielsweise geeignet.

Das aus den Dachbaustoffen gewonnene Granulat kann unmittelbar im Asphaltmischer mit dem erhitzten Mineralgranulat vermischt werden, so daß der gewünschte Asphaltbaustoff entsteht. Das aus dem Dachbaustoff hervorgegangene Granulat kann jedoch relativ klebrig sein, so daß es im Betrieb beim Asphalthersteller nur schwer handhabbar ist, weil es sich schlecht dosieren, schütten und lagern läßt. In vorstehendem Sinne besteht im Rahmen der Erfindung eine weitere Aufgabe darin, bituminöse Dachbaustoffe aus Fehlproduktion bzw. Rückbau so hantierbar bzw. dosierbar und schüttbar bzw. lagerbar zu machen, daß beim Zusammentreffen mit dem granulierten Mineralgerüst im Asphaltmischer eine optimal gleichförmige Granulatmischung der zusammengeführten Teilströme (erhitztes Mineralgranulat einerseits und - in der Regel kaltes - Dachbaustoff-Granulat andererseits) entsteht. Gemäß weiterer Erfindung besteht eine Lösung dieser Aufgabe darin, daß eine Mischung aus granulierten Dachbaustoffen und einem Asphaltgranulat hergestellt und als solches dem erhitzten Mineralgranulat im Asphaltmischer zugegeben wird.

Als Asphaltgranulat bzw. Alt-Asphalt können bevorzugt vom Straßenbau stammende Alt-Asphaltteile, insbesondere nach beispielsweise in einer Prallmühle erfolgter Zerkleinerung, verwendet werden. Durch die (vorzugsweise kalt ausgeführte) Vermischung der granulierten Dachbaustoffe mit Asphaltgranulat entsteht ein Gemenge mit für die Anwendung in einer Asphaltfabrik günstigen mechanischen Eigenschaften als Schüttgut, insbesondere im Sinne einer besseren Dosierbarkeit sowie eines guten Lager- und Fließverhaltens. Auch ein bereits beim Brechvorgang von Alt-Asphalt mit Dachstoff-Granulatzugabe zusammengeführten Alt-Asphalt/Dachstoff-Granulatgemenge läßt sich als Zwischenprodukt lagern, ohne störend zu verkleben.

Dieses Alt-Asphalt/Dachstoff-Granulatgemenge, das im Asphaltmischer mit dem erhitzten Mineralgerüst bzw. -granulat zu vermengen ist, besteht aus dem Alt-Asphaltanteil, der etwa denselben Bitumenanteil, nämlich etwa 4 %, wie der herzustellende Asphalt aufweist, und aus dem Dachstoff mit größenordnungsmäßig etwa 70 % Bitumen. Dieser aus Alt-Asphalt und Dachstoff bestehende, in das Mineralgerüst einzubringende Altstoff-Zuschlag selbst hat also einen höheren Bitumenanteil als der herzustellende, neue Asphalt insgesamt. Der Altstoff-Zuschlag kann daher den Bedarf an frischem Bitumen bei der Asphaltherstellung teilweise oder ganz ersetzen. Das hat den Vorteil, daß die Kosten für die Herstellung von Straßenasphalt minimal werden, weil in die Kostenrechnung auch der Gewinn-Betrag für die Entsorgung der Altstoffe, insbesondere der Dachbaustoffe, eingeht.

Nach dem erfindungsgemäßen Verfahren wird ein Asphaltmischgut hergestellt, das aus einem granulierten Mineralgerüst einerseits und einem Bitumen-Bindemittel andererseits zusammengesetzt ist. Erfindungsgemäß besteht das Bitumen-Bindemittel wenigstens teilweise aus bitumenhaltigem, insbesondere granuliertem, Dachbaustoff.

Bei einem bevorzugten erfindungsgemäßen Verfahren zum Herstellen von Asphaltmischgut wird entweder das (reine) Dachstoffgranulat oder das Asphalt/Dachstoff-Granulatgemisch durch Zugabe zu den originären erhitzten (in der Regel trocken-mineralischen) Asphaltausgangsprodukten im Herstellungsprozeß des Asphalts so erhitzt, daß das insgesamt im Granulatgemisch enthaltene Bitumen aufweicht und als Bindemittel in Funktion tritt; hierdurch wird nicht nur eine Entsorgung der genannten Altstoffe, sondern auch erreicht, daß nur wenig - gegenüber dem Stand der Technik - oder gar kein frisches Bitumen zugegeben werden muß. Die sonstigen Bestandteile des Dachstoffgranulats, nämlich des Trägermaterials und eine eventuelle Beschieferung, werden dabei - wie oben angegeben - ebenfalls stofflich wiederverwendet.

Es wird ein Verfahren zur Entsorgung bituminöser Dachbaustoffe beschrieben. Um die Entsorgungskosten zu reduzieren und eine stoffliche Wiederverwendung zu ermöglichen, werden die Dachbaustoffe einem heißen Mineralgranulat im Produktionsgang bituminöser Straßenbaustoffe zugegeben.

## Patentansprüche

1. Verfahren zur Entsorgung bituminöser Dachbaustoffe, insbesondere von Dachbahnen, **dadurch gekennzeichnet, daß** die Dachbaustoffe einem Mineralgranulat im Produktionsgang bituminöser Straßenbaustoffe zugegeben werden.

2. Verfahren nach Anspruch 1, **dadurch gekennzeichnet, daß** die Dachbaustoffe einem Mineralgranulat im Produktionsgang von Asphalt zugegeben werden.

3. Verfahren nach Anspruch 1 oder 2, **dadurch gekennzeichnet, daß** die Dachbaustoffe dem Mineralgranulat im aufbereiteten Zustand aber mit allen ihren originären Bestandteilen zugegeben werden.

4. Verfahren nach mindestens einem der Ansprüche 1 bis 3, **dadurch gekennzeichnet, daß** die Dachbaustoffe vor dem Zugeben zu dem Mineralgranulat durch Zerkleinerung zu einem Granulat mit einer den Erfordernissen des herzustellenden Straßenbaustoffs entsprechenden Stückgröße aufbereitet werden.

5. Verfahren nach mindestens einem der Ansprüche 1 bis 4, **dadurch gekennzeichnet, daß** eine Mischung aus granulierten Dachbaustoffen und einem Asphaltgranulat hergestellt und als solche in einem Asphaltmischer einem vorher erhitzten Mineralgranulat zugegeben wird.

6. Verfahren nach Anspruch 5, **dadurch gekennzeichnet, daß** die Mischung aus granulierten Dachbaustoffen und einem Asphaltgranulat ohne Wärmezufuhr hergestellt wird.

7. Verfahren nach Anspruch 5 oder 6, **dadurch gekennzeichnet, daß** das Mischungsverhältnis von Asphaltgranulat und Dachbaustoffgranulat so gewählt wird, daß im Asphaltmischer möglichst wenig bis gar kein frisches Bitumen gebraucht wird.

8. Verfahren nach mindestens einem der Ansprüche 1 bis 7, **dadurch gekennzeichnet, daß** die nicht zum Bitumen gehörenden Bestandteile der Dachbaustoffe insgesamt in den Straßenbaustoff übernommen werden.

9. Verfahren nach Anspruch 8, **dadurch gekennzeichnet, daß** ein nicht zum Bitumen gehörendes Trägermaterial der Dachbaustoffe insgesamt in den Straßenbaustoff übernommen wird.

10. Verfahren nach Anspruch 8 oder 9, **dadurch gekennzeichnet, daß** eine nicht zum Bitumen gehörende Beschieferung der Dachbaustoffe insgesamt in den Straßenbaustoff übernommen wird.

11. Verfahren nach mindestens einem der Ansprüche 8 bis 10, **dadurch gekennzeichnet, daß** das beim Granulieren des Dachbaustoffs zerkleinerte Trägermaterial als stabilisierender Bindemittelträger und damit als innere Armierung des herzustellenden Straßenbaustoffs verwendet wird.

12. Verfahren nach Anspruch 11, **dadurch gekennzeichnet, daß** ein beim Granulieren des Dachbaustoffs zerkleinertes Kunststoffvlies als stabilisierender Bindemittetträger verwendet wird.

## Claims

1. Method for the disposal of bitumen roofing materials, in particular roof sheeting, **characterised in that** the roofing materials are added to a mineral granulate in the production process of bitumen road materials.

2. Method according to Claim 1 **characterised in that** the roofing materials are added to a mineral granulate in the production process of asphalt.

3. Method according to Claim 1 or 2 **characterised in that** the roofing materials are added to a mineral granulate in a processed condition but with all their original components.

4. Method according to at least one of the Claims 1 - 3 **characterised in that** the roofing materials are reduced to a granulate with the size appropriate to meet the requirements of the road construction material to be produced before they are added to the mineral granulate.

5. Method according to at least one of the Claims 1 - 4 **characterised in that** a mixture of granulated roofing materials and an asphalt granulate is produced and added as such to a previously heated mineral granulate in an asphalt mixer.

6. Method according to Claim 5 **characterised in that** the mixture of granulated roofing materials and an asphalt granulate is produced without heat addition.

7. Method according to Claim 5 or 6 **characterised in that** the mixture proportion of asphalt granulate and roofing material is selected in such a way that in the asphalt mixer as little bitumen as possible, or no new bitumen at all is required.

8. Method according to at least one of the Claims 1 - 7 **characterised in that** the components of the roofing materials not belonging to bitumen will be entirely integrated into the road construction material.

9. Method according to Claim 8 **characterised in that** a substrate material of the roofing material not belonging to the bitumen will be integrated in a body into the road construction material.

10. Method according to Claim 8 or 9 **characterised in that** slate of the roofing material not belonging to the bitumen will be integrated in a body into the road construction material.

11. Method according to at least one of the Claims 8 - 10 **characterised in that** in the granulation of the roofing material reduced substrate material is used as a stabilising binding base material and an inner reinforcement of the road construction material to be produced.

12. Method according to Claim 11 **characterised in that** a man-made fleece material reduced in the granulation of the roofing material is used as a stabilizing binding base material.

## Revendications

1. Procédé pour l'élimination des matériaux de construction de toiture bitumineux, en particulier des feuilles de toiture, **caractérisé en ce que** les matériaux de construction de toiture sont ajoutés à un granulé minéral lors de la production des matériaux de construction routière bitumineux.

2. Procédé selon la revendication 1, **caractérisé en ce que** les matériaux de construction de toiture sont ajoutés à un granulé minéral lors de la production d'asphalte.

3. Procédé selon la revendication 1 ou 2, **caractérisé en ce que** les matériaux de construction de toiture sont ajouté au granulé minéral en état traité mais avec tous ses composants originaux.

4. Procédé selon au moins l'une des revendications 1 à 3, **caractérisé en ce que** les matériaux de construction de toiture sont traités par fractionnement jusqu'à ce qu'ils atteignent la forme de granulé avec une taille remplissant les exigences du matériau de construction routière à produire avant l'ajout au granulé minéral.

5. Procédé selon au moins l'une des revendications 1 à 4, **caractérisé en ce qu'**un mélange des matériaux de construction de toiture granulé et d'un granulé d'asphalte est produit et ajouté dans un malaxeur d'asphalte à un granulé minéral qui est échauffé au préalable.

6. Procédé selon la revendication 5, **caractérisé en ce que** le mélange des matériaux de construction de toiture granulés et du granulé d'asphalte est produit sans apport de chaleur.

7. Procédé selon la revendication 5 ou 6, **caractérisé en ce que** la proportion de mélange du granulé d'asphalte et du granulé de matériau de construction de toiture est choisie de manière à ce qu'on ne nécessite pas du tout ou le moins possible de bitume frais dans le malaxeur d'asphalte.

8. Procédé selon au moins l'une des revendications 1 à 7, **caractérisé en ce que** les composants des matériaux de constructions de toiture qui ne font pas partie du bitume sont complètement repris dans le matériau de construction routière.

9. Procédé selon la revendication 8, **caractérisé en ce qu'**un matériau support des matériaux de constructions de toiture qui ne fait pas partie du bitume est complètement repris dans le matériau de construction routière.

10. Procédé selon la revendication 8 ou 9, **caractérisé en ce qu'**une schistosité des matériaux de constructions de toiture qui ne fait pas partie du bitume est complètement repris dans le matériau de construction routière.

11. Procédé selon au moins l'une des revendications 8 à 10, **caractérisé en ce que** lors de la granulation du matériaux de constructions de toiture du matériau support fractionné est utilisé comme support d'agglomérant stabilisant et par ce faire comme armature du matériau de construction routière à produire.

12. Procédé selon la revendication 11, **caractérisé en ce que** lors de la granulation du matériaux de constructions de toiture de la voile synthétique fractionnée est utilisée comme support d'agglomérant stabilisant.
